# EUROPÄISCHE PATENTSCHRIFT

(11) **EP 0 616 274 B1**
(45) Veröffentlichungstag und Bekanntmachung des Hinweises auf die Patenterteilung: **05.06.1996**
(21) Anmeldenummer: 93104243.6
(22) Anmeldetag: 16.03.1993
(51) Int. Cl.: G05B 9/03, G05B 19/05, G06F 11/16

(54) **Synchronisationsverfahren für Automatisierungssysteme**
Synchronisation method for an automation system
Méthode de synchronisation pour un système d'automatisation

(43) Veröffentlichungstag der Anmeldung: 21.09.1994
(73) Patentinhaber: SIEMENS AKTIENGESELLSCHAFT, D-80333 München (DE)
(72) Erfinder: Barthel, Herbert, Dipl.-Ing., W-8522 Herzogenaurach (DE); Daar, Horst, Dr.-Ing., W-8520 Erlangen (DE); Schütz, Hartmut, Dipl.-Ing., W-8551 Heroldsbach (DE)

(56) Entgegenhaltungen:
- EP-A- 0 104 490
- EP-A- 0 394 514
- EP-A- 0 447 576
- EP-A- 0 497 147
- US-A- 4 733 353
- US-A- 4 937 741

## Beschreibung

Die vorliegende Erfindung betrifft ein Synchronisationsverfahren für ein redundant aus mindestens zwei Teilsystemen aufgebautes Automatisierungssystem, wobei die Teilsysteme über Kommunikationsmittel miteinander verbunden sind, sowie ein Erzeugungsverfahren zum Erzeugen einer Folge von Maschinenbefehlen für die Teilsysteme eines redundant aus mindestens zwei Teilsystemen aufgebauten Automatisierungssystems aus einem Anwenderprogramm.

Synchronisationsverfahren für Automatisierungssysteme sind allgemein bekannt. Das Automatisierungssystem kann z. B. taktsynchron oder ereignissynchron arbeiten. Weiterhin ist aus der EP 0 497 147 A2 ein Verfahren zum Betreiben eines redundant aus zwei Teilgeraten aufgebauten Automatisierungsgerats bekannt, bei dem sich spätestens nach Ablauf einer vom Benutzer vorwählbaren Zeit die Teilsysteme synchronisieren.

Treten in dem von den Teilsystemen abgearbeiteten Programmen Sprünge auf, mußte bisher stets vor dem Sprungbefehl eine Synchronisation durchgeführt werden, da durch den Sprung die "Vorgeschichte" verlorengeht, das jeweilige Teilsystem also nicht mehr weiß, wann die letzte Synchronisation durchgeführt wurde. Das Verfahren gemäß der EP 0 497 147 A2 war daher insofern noch nicht optimal, als unnötig viel Zeit für die Synchronisation verbraucht wurde.

Aus der EP 0 394 514 A1 ist ein Verfahren zur Synchronisation von Datenverarbeitungsanlagen bekannt, in dem eine Synchronisation nur in Abhängigkeit von synchronisationsbedingenden Ereignissen durchgeführt wird. Je nach Art des Ereignisses wird dabei entweder unmittelbar eine Synchronisation aufgelöst oder eine später auszuführende Synchronisation angefordert.

Die Aufgabe der vorliegenden Erfindung besteht darin, bei möglichst geringem Aufwand für Synchronisationsaufgaben eine reproduzierbare Alarmreaktionszeit sicher und zuverlässig zu gewährleisten. Darüber hinaus soll durch die Minimierung des Aufwands zur Synchronisation die Rechenleistung des Automatisierungssystems besser ausgenützt werden. Weiterhin sollen manuelle Eingriffe in das Anwenderprogramm, durch die Fehler verursacht werden könnten, vermieden werden.

Die Aufgabe wird durch folgende Merkmale gelöst:
- identische Folgen von Maschinenbefehlen für die Teilsysteme werden in den Teilsystemen parallel ausgeführt, wobei die Folgen von Maschinenbefehlen Laufzeitabfragen enthalten;
- bei Erreichen einer Laufzeitabfrage durch eines der Teilsysteme wird die tatsächliche Laufzeit dieses Teilsystems seit der letzten Synchronisation der Teilsysteme ermittelt;
- in diesem Teilsystem wird eine Synchronisationsroutine aufgerufen, wenn die Laufzeit dieses Teilsystems ein vorwählbares Synchronisationsraster übersteigt.

Die Folgen von Maschinenbefehlen werden dabei aus einem Anwenderprogramm erzeugt,
- wobei beim Erzeugen der Folgen von Maschinenbefehlen die Laufzeiten der Maschinenbefehle zu einem Laufzeiterwartungswert aufaddiert werden und
- wobei spätestens dann eine Laufzeitabfrage in die Folge von Maschinenbefehlen eingefügt und der Laufzeiterwartungswert zurückgesetzt wird, wenn der Laufzeiterwartungswert eine vorwählbare Grenzzeit überschreitet.

Das Erzeugen der Folgen von Maschinenbefehlen kann dabei zur Laufzeit des Anwenderprogramms, also in einem Interpreter, erfolgen. Ebenso kann die Folge von Maschinenbefehlen aber auch vorab mittels eines Compilers erzeugt werden.

Ein praktisch befehlssynchroner Gleichlauf der Teilsysteme wird erreicht, wenn bei Erreichen einer Laufzeitabfrage durch eines der Teilsysteme die Laufzeitabfrage erst dann ausgeführt wird, wenn das andere Teilsystem die mit der Laufzeitanfrage korrespondierende Laufzeitabfrage in seiner Folge von Maschinenbefehlen erreicht.

Analog zur Synchronisation vor Sprungbefehlen beim Stand der Technik wird bei der vorliegenden Erfindung vor Sprungbefehlen, insbesondere vor bedingten Sprungbefehlen, stets eine Laufzeitabfrage in die Folge von Maschinenbefehlen eingefügt.

Wenn die Grenzzeit kleiner, insbesondere erheblich kleiner, als das Synchronisationsraster zum Synchronisieren der Teilsysteme ist, wird die Alarmreaktionszeit noch exakter reproduzierbar. Weitere Vorteile und Einzelheiten ergeben sich aus der nachfolgenden Beschreibung eines Ausführungsbeispiels. Dabei zeigen:
FIG 1 ein Blockschaltbild eines Automatisierungssystems und
FIG 2 das Prinzip des Erzeugungsverfahrens.

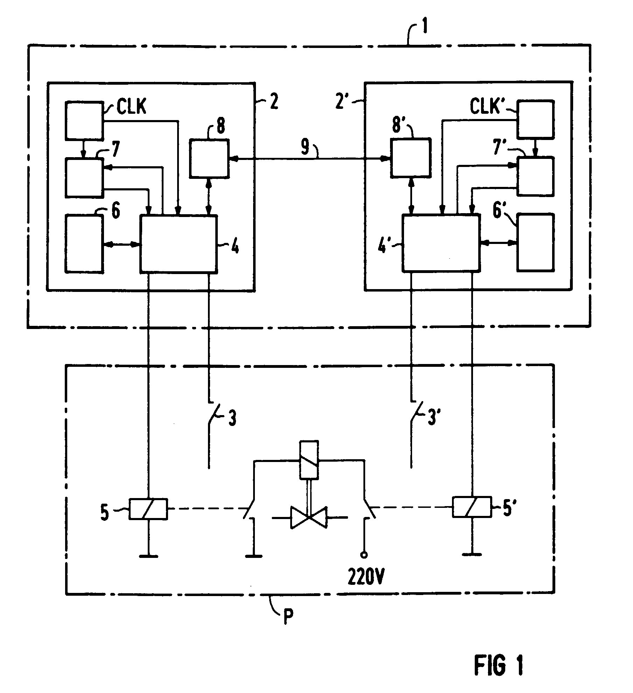

Gemäß FIG 1 besteht das Automatisierungssystem 1 aus zwei Teilsystemen 2, 2', die gemeinsam einen technologischen Prozeß P steuern, z. B. eine Brenneranlage. Hierzu werden den Teilsystemen 2, 2' mittels der Geber 3, 3' Signale über den momentanen Zustand des Prozesses P übermittelt. Die gemeldeten Prozeßsignale werden in den Zentraleinheiten 4, 4' verarbeitet und aufgrund der Verarbeitung Schaltbefehle an Stellglieder 5, 5' ausgegeben.

Die Verarbeitung der Eingangssignale und Ermittlung der Ausgangssignale erfolgt in den Zentraleinheiten 4, 4' parallel anhand identischer Folgen von Maschinenbefehlen MP, die in Speichereinheiten 6, 6' abgespeichert sind.

Die Folgen von Maschinenbefehlen MP enthalten Laufzeitabfragen. Wenn die Teilsysteme 2, 2' eine derartige Laufzeitabfrage erreichen, wird aus den Zeitgebern 7, 7' die Laufzeit der Teilsysteme 2, 2' seit der letzten Synchronisation der Teilsysteme 2, 2' abgerufen. Diese Laufzeit wird mit einem Synchronisationsraster verglichen, das anwendungsspezifisch vorgegeben werden kann. Ist diese Laufzeit kleiner als das Synchronisationsraster, wird die Abarbeitung der Folge von Maschinenbefehlen MP fortgesetzt. Die Nichtsynchronisierung bei Erreichen der Laufzeitabfragen schadet dabei nicht, da die Laufunterschiede der Teilsysteme 2, 2' innerhalb der Toleranzgrenzen liegen.

Übersteigt die Laufzeit das Synchronisationsraster, so werden die Kommunikationsprozessoren 8, 8' aufgerufen. Die Kommunikationsprozessoren 8, 8' führen eine Synchronisationsroutine aus, mittels derer sich die Teilsysteme 2, 2' miteinander synchronisieren. Dabei werden u. a. über die Kommunikationsleitung 9 Daten zwischen den Kommunikationsprozessoren 8, 8' ausgetauscht. Die Synchronisation selbst erfolgt in allgemein bekannter Art und Weise. Sie ist nicht Gegenstand der vorliegenden Erfindung und wird daher an dieser Stelle nicht näher ausgeführt. Nach dem Durchführen einer Synchronisation werden die Zeitgeber 7, 7' zurückgesetzt.

Oben wurde beschrieben, daß die Folgen von Maschinenbefehlen MP sofort unabhängig voneinander weiter ausgeführt werden, wenn die Laufzeiten der Teilsysteme 2, 2' das Synchronisationsraster noch nicht übersteigen. Alternativ ist aber auch folgende Vorgehensweise möglich:

Bei Erreichen einer Laufzeitabfrage verharrt die Zentraleinheit 4 des Teilsystems 2 und meldet das Erreichen der Laufzeitabfrage über den Kommunikationsprozessor 8 und die Kommunikationsleitung 9 an den Kommunikationsprozessor 8' des Teilsystems 2'. Die Laufzeitabfrage selbst wird vom Teilsystem 2 erst dann ausgeführt, wenn auch das Teilsystem 2' die mit der Laufzeitanfrage des Teilsystems 2 korrespondierende Laufzeitabfrage in seiner Folge von Maschinenbefehlen MP erreicht hat und dies über den Kommunikationsprozessor 8' und die Kommunikationsleitung 9 an den Kommunikationsprozessor 8 gemeldet hat. Dadurch wird ein nahezu befehlssynchroner Lauf der beiden Teilsysteme erreicht.

Um Systemblockierungen zu vermeiden, muß in diesem Fall selbstverständlich die Abarbeitung der Folge von Maschinenbefehlen MP im Teilsystem 2 fortgesetzt werden, wenn das Teilsystem 2' das Erreichen der korrespondierenden Laufzeitabfrage nicht binnen einer vorwählbaren Wartezeit quittiert.

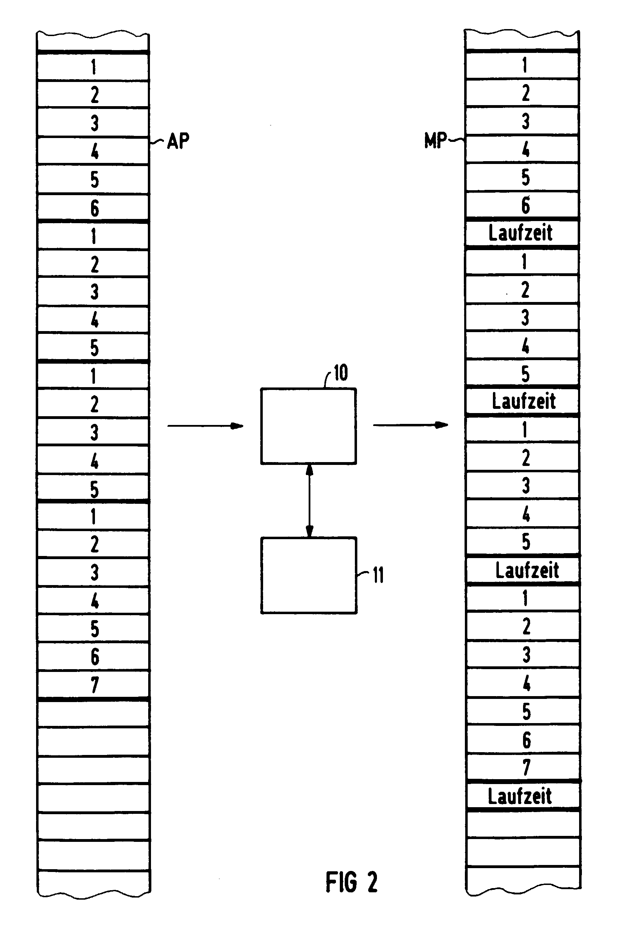

Gemäß FIG 2 wird die Folge von Maschinenbefehlen MP aus dem Anwenderprogramm AP mittels einer Übersetzungseinheit 10 erzeugt. Das Anwenderprogramm AP besteht aus einer Folge von Anwenderbefehlen, die in einer Hochsprache oder in einem Assembler-Code geschrieben sein können. Für jeden Befehl ist eine zugehörige Laufzeit in der Speichereinheit 11 abgespeichert. Beim Übersetzen der Befehle des Anwenderprogramms AP werden die zugehörigen Laufzeiten von der Übersetzungseinheit 10 aus der Speichereinheit 11 abgerufen und zu einem Laufzeiterwartungswert aufaddiert. Spätestens dann, wenn der Laufzeiterwartungswert eine vorwählbare Grenzzeit überschreitet, wird eine Laufzeitabfrage in die Folge von Maschinenbefehlen eingefügt und der Laufzeiterwartungswert zurückgesetzt. Die Grenzzeit kann anwendungsspezifisch vorgegeben werden.

Unabhängig von dem momentanen Laufzeiterwartungswert wird stets eine Laufzeitabfrage in die Folge von Maschinenbefehlen eingefügt, wenn das Anwenderprogramm AP einen Sprungbefehl, insbesondere einen bedingten Sprungbefehl enthält. Die Laufzeitabfrage wird dabei vor dem Sprungbefehl in die Folge von Maschinenbefehlen MP eingefügt.

Die vorwählbare Grenzzeit ist vorzugsweise erheblich kleiner als das Synchronisationsraster. Ein typisches Synchronisationsraster liegt beispielsweise im Bereich zwischen 5 und 20 ms, die Grenzzeit typisch im Bereich von 1 ms.

Die Übersetzungseinheit 10 kann wahlweise als Compiler oder als Interpreter ausgebildet sein. Bei Ausbildung als Compiler muß die Übersetzungseinheit 10 nur einmal vorhanden sein, da das Maschinenprogramm MP so oft wie nötig, z. B. durch Kopieren, erstellt werden kann und dann in die Teilsysteme 2, 2' eingespeichert werden kann. Bei Ausbildung als Interpreter muß die Übersetzungseinheit 10 dagegen in jedem der Teilsysteme 2, 2' vorhanden sein, was zusätzliche Kosten verursacht. Der Kostennachteil ist besonders hoch, wenn nicht nur zwei, sondern drei oder vier Teilsysteme vorhanden sind.

Das Automatisierungssystem 1 kann sowohl eine speicherprogrammierbare Steuerung als auch ein Prozeßleitsystem oder ein Prozeßrechner sein.

## Patentansprüche

1. Synchronisationsverfahren für ein redundant aus mindestens zwei Teilsystemen (2,2') aufgebautes Automatisierungssystem (1), wobei die Teilsysteme (2,2') über Kommunikationsmittel (9) miteinander verbunden sind, mit folgenden Merkmalen:
- identische Folgen von Maschinenbefehlen (MP) für die Teilsysteme (2,2') werden in den Teilsystemen (2,2') parallel ausgeführt, wobei die Folgen von Maschinenbefehlen (MP) Laufzeitabfragen enthalten;
- bei Erreichen einer Laufzeitabfrage durch eines der Teilsysteme(2,2') wird die tatsächliche Laufzeit dieses Teilsystems (z. B. 2) seit der letzten Synchronisation der Teilsysteme (2,2') ermittelt;
- in diesem Teilsystem (2) wird eine Synchronisationsroutine aufgerufen, wenn die Laufzeit dieses Teilsystems (2) ein vorwählbares Synchronisationsraster übersteigt.

2. Synchronisationsverfahren nach Anspruch 1, **dadurch gekennzeichnet,** daß bei Erreichen einer Laufzeitabfrage durch eines der Teilsysteme (z. B. 2) die Laufzeitabfrage erst dann ausgeführt wird, wenn das andere Teilsystem (z. B. 2') die mit der Laufzeitanfrage korrespondierende Laufzeitabfrage in seiner Folge von Maschinenbefehlen (MP) erreicht.

3. Synchronisationsverfahren nach Anspruch 1 oder 2, **dadurch gekennzeichnet,** daß die Folgen von Maschinenbefehlen (MP) aus einem Anwenderprogramm (AP) erzeugt werden,
- wobei beim Erzeugen der Folgen von Maschinenbefehlen (MP) die Laufzeiten der Maschinenbefehle zu einem Laufzeiterwartungswert aufaddiert werden und
- wobei spätestens dann eine Laufzeitabfrage in die Folge von Maschinenbefehlen (MP) eingefügt und der Laufzeiterwartungswert erwartungswert zurückgesetzt wird, wenn der Laufzeiterwartungswert eine vorwählbare Grenzzeit überschreitet.

4. Synchronisationsverfahren nach Anspruch 3, **dadurch gekennzeichnet**, daß vor Sprungbefehlen stets eine Laufzeitabfrage in die Folge von Maschinenbefehlen (MP) eingefügt wird.

5. Synchronisationsverfahren nach Anspruch 3 oder 4, **dadurch gekennzeichnet,** daß vor bedingten Sprungbefehlen stets eine Laufzeitabfrage in die Folge von Maschinenbefehlen (MP) eingefügt wird.

6. Synchronisationsverfahren nach Anspruch 3, 4 oder 5, **dadurch gekennzeichnet,** daß die Grenzzeit kleiner, insbesondere erheblich kleiner, als das Synchronisationsraster ist.

7. Erzeugungsverfahren zum Erzeugen einer Folge von Maschinenbefehlen (MP) für die Teilsysteme (2,2') eines redundant aus mindestens zwei Teilsystemen (2,2') aufgebauten Automatisierungssystems (1) aus einem Anwenderprogramm (AP),
- wobei beim Erzeugen der Folgen von Maschinenbefehlen (MP) die Laufzeiten der Maschinenbefehle zu einem Laufzeiterwartungswert aufaddiert werden und
- wobei spätestens dann eine Laufzeitabfrage in die Folge von Maschinenbefehlen (MP) eingefügt und der Laufzeiterwartungswert zurückgesetzt wird, wenn der Laufzeiterwartungswert eine vorwählbare Grenzzeit überschreitet.

8. Erzeugungsverfahren nach Anspruch 7, **dadurch gekennzeichnet,** daß vor Sprungbefehlen stets eine Laufzeitabfrage in die Folge von Maschinenbefehlen (MP) eingefügt wird.

9. Erzeugungsverfahren nach Anspruch 7 oder 8, **dadurch gekennzeichnet,** daß vor bedingten Sprungbefehlen stets eine Laufzeitabfrage in die Folge von Maschinenbefehlen (MP) eingefügt wird.

10. Erzeugungsverfahren nach Anspruch 7, 8 oder 9, **dadurch gekennzeichnet,** daß die Grenzzeit kleiner, insbesondere erheblich kleiner, als ein Synchronisationsraster zum Synchronisieren der Teilsysteme ist.

## Claims

1. A synchronisation method for a redundant automation system (1) constructed from at least two sub-systems (2, 2'), the sub-systems (2, 2') being interconnected via communication means (9), and having the following features:
- identical sequences of machine instructions (MP) for the sub-systems (2, 2') are executed in parallel in the sub-systems (2, 2'), the sequences of machine instructions (MP) containing run-time queries;
- when one of the sub-systems (2, 2') reaches a run-time query, the actual run-time of that sub-system (e.g. 2) since the last synchronisation of the sub-systems (2, 2') is determined;
- a synchronisation routine is invoked in that sub-system (2) if the run-time of that sub-system (2) exceeds a preselectable synchronisation reference pattern

2. Synchronisation method according to Claim 1, characterised in that when one of the sub-systems (e.g. 2) reaches a run-time query, the run-time query is only executed when the other sub-system (e.g. 2') reaches the corresponding run-time query in its sequence of machine instructions (MP).

3. Synchronisation method according to Claim 1 or 2, characterised in that the sequences of machine instructions (MP) are produced from an application program (AP),
- the run-times of the machine instructions being summed to obtain a run-time expected value when the sequences of machine instructions (MP) are generated, and
- a run-time query being inserted into the sequence of machine instructions (MP) and the run-time expected value is reset at the latest when the run-time expected value exceeds a preselectable time limit.

4. Synchronisation method according to Claim 3, characterised in that a run-time query is always inserted into the sequence of machine instructions (MP) prior to branch instructions.

5. Synchronisation method according to Claim 3 or 4, characterised in that a run-time query is always inserted into the sequence of machine instructions (MP) prior to conditional branch instructions.

6. Synchronisation method according to Claim 3, 4 or 5, characterised in that the time limit is less, in particular considerably less, than the synchronisation reference pattern.

7. Generation method for generating a sequence of machine instructions (MP) from an application program (AP) for the sub-systems (2, 2') of a redundant automation system (1) constructed from at least two sub-systems (2, 2'),
- the run-times of the machine instructions being summed to obtain a run-time expected value when the sequences of machine instructions (MP) are generated, and
- a run-time query being inserted into the sequence of machine instructions (MP) and the run-time expected value is reset at the latest when the run-time expected value exceeds a preselectable time limit.

8. Generation method according to Claim 7, characterised in that a run-time query is always inserted into the sequence of machine instructions (MP) prior to branch instructions.

9. Generation method according to Claim 7 or 8, characterised in that a run-time query is always inserted into the sequence of machine instructions (MP) prior to conditional branch instructions.

10. Generation method according to Claim 7, 8 or 9, characterised in that the time limit is less, in particular considerably less, than a synchronisation reference pattern for synchronising the sub-systems.

## Revendications

1. Procédé de synchronisation d'un système (1) d'automatisation constitué de manière redondante d'au moins deux systèmes partiels (2,2'), les systèmes partiels (2,2') étant reliés l'un à l'autre par l'intermédiaire de moyens (9) de communication, ayant les caractéristiques suivantes :
- on exécute en parallèle, dans les systèmes partiels (2,2'), des suites identiques d'instructions (MP) de machine pour les systèmes partiels (2,2'), les suites d'instructions (MP) de machine comprenant des interrogations de temps d'exécution;
- lorsque l'un des systèmes partiels (2,2') atteint une interrogation de temps d'exécution, on détermine le temps effectif d'exécution de ce système partiel (par exemple 2) depuis la dernière synchronisation des systèmes partiels (2,2');
- on appelle une routine de synchronisation dans ce système partiel (2), lorsque le temps d'exécution de ce système partiel (2) est supérieur à une trame de synchronisation pouvant être choisie à l'avance.

2. Procédé de synchronisation suivant la revendication 1, caractérisé en ce que lorsque l'un des systèmes partiels (par exemple 2) atteint une interrogation de temps d'exécution, on n'effectue l'interrogation de temps d'exécution que lorsque l'autre système partiel (par exemple 2') atteint l'interrogation de temps d'exécution correspondant à la demande de temps d'exécution dans sa suite d'instructions (MP) de machine.

3. Procédé de synchronisation suivant la revendication 1 ou 2,
caractérisé en ce que l'on produit les suites d'instructions (MP) de machine à partir d'un programme (AP) utilisateur,
- on additionne, lors de la production des suites d'instructions (MP) de machine, les temps d'exécution des instructions de machine en une valeur escomptée de temps d'exécution, et
- on insère une interrogation de temps d'exécution dans la suite des instructions (MP) de machine et on remet à l'état initial la valeur escomptée de temps d'exécution, au plus tard lorsque la valeur escomptée de temps d'exécution devient supérieure à un temps limite pouvant être choisi à l'avance.

4. Procédé de synchronisation suivant la revendication 3, caractérisé en ce que l'on insère une interrogation de temps d'exécution dans la suite d'instructions (MP) de machine toujours avant des instructions de saut.

5. Procédé de synchronisation suivant la revendication 3 ou 4, caractérisé en ce que l'on insère une interrogation de temps d'exécution dans la suite d'instructions (MP) de machine toujours avant des instructions de saut conditionnel.

6. Procédé de synchronisation suivant la revendication 3, 4 ou 5, caractérisé en ce que le temps limite est plus petit, notamment beaucoup plus petit, que la trame de synchronisation.

7. Procédé de production d'une suite d'instructions (MP) de machine pour les systèmes partiels (2,2') d'un système (1) d'automatisation formé de manière redondante d'au moins deux systèmes partiels (2,2') à partir d'un programme utilisateur (AP),
- dans lequel on additionne, lors de la production des suites d'instructions (MP) de machine, les temps d'exécution des instructions de machine en une valeur escomptée de temps d'exécution, et
- dans lequel on insère une interrogation de temps d'exécution dans la suite d'instructions (MP) de machine et on remet à l'état initial la valeur escomptée de temps d'exécution, au plus tard lorsque la valeur escomptée de temps d'exécution devient supérieure à une valeur limite pouvant être choisie à l'avance.

8. Procédé de production suivant la revendication 7, caractérisé en ce que l'on insère une interrogation de temps d'exécution dans la suite d'instructions (MP) de machine toujours avant des instructions de saut.

9. Procédé de production suivant la revendication 7 ou 8, caractérisé en ce que l'on insère une interrogation de temps d'exécution dans la suite d'instructions (MP) de machine toujours avant des instructions de saut conditionnel.

10. Procédé de production suivant la revendication 7, 8 ou 9, caractérisé en ce que le temps limite est plus petit, notamment beaucoup plus petit, qu'une trame de synchronisation destinée à synchroniser les systèmes partiels.
